# EUROPÄISCHE PATENTSCHRIFT

(11) **EP 1 251 418 B1**
(45) Veröffentlichungstag und Bekanntmachung des Hinweises auf die Patenterteilung: **11.02.2009**
(21) Anmeldenummer: 02005707.1
(22) Anmeldetag: 13.03.2002
(51) Int. Cl.: G05G 5/06

(54) **Arretiervorrichtung für zueinander bewegliche Maschinenteile**
Locking device for machine parts having a relative motion
Dispositif d'arrêt d'éléments de machine ayant un mouvement relatif

(30) Priorität: 18.04.2001 DE 10118874
(43) Veröffentlichungstag der Anmeldung: 23.10.2002
(73) Patentinhaber: Schaeffler KG, 91074 Herzogenaurach (DE)
(72) Erfinder: Soyka, Wilfried, 91074 Herzogenaurach (DE); Schramm, Matthias, 96135 Stegaurach (DE)

(56) Entgegenhaltungen:
- DE-A- 4 409 492
- DE-A- 19 941 794
- DE-C- 19 580 558
- GB-A- 2 089 451
- US-B1- 6 186 301

## Beschreibung

### Gebiet der Erfindung

Arretiervorrichtung für zueinander bewegliche Maschinenteile mit zumindest einer Rastausnehmung an einem Maschinenteil und mit einem Rastelement an einem anderen Maschinenteil, das ein Tragelement, eine darin angeordnete Rastfeder, gegebenenfalls ein Gleitstück und einen Rastkörper aufweist, wobei die Bewegung des Rastkörpers oder des Gleitstückes mittels Haltelaschen gegen die Kraft der Rastfeder begrenzt ist, die sich ihrerseits am Fuß des Tragelements abstützt und wobei an dem Tragelement, vorzugsweise an dem dem Rastkörper zugewandten Ende, Führungslaschen vorgesehen sind.

### Hintergrund der Erfindung

Eine derartige gattungsbildende Arretiervorrichtung ist aus der DE- 195 80 558 C1 bekannt. Ein Rastelement wird bei einer Synchronisiereinrichtung für Schaltgetriebe benutzt und in den Synchronkörper eingesetzt. Das Rastelement stützt sich dabei über die Führungslaschen an beiderseits angeordneten Synchronringen ab, so dass keine Festlegung des Rastelements in dem Synchronkörper als dem dem Rastelement zugeordneten Maschinenteil vorgesehen ist. Deshalb haben die Führungslaschen Formgestaltungen, die zu den Synchronringen beziehungsweise den in den Ringen angeordneten Ausnehmungen passen.

### Aufgabe der Erfindung

Aufgabe der Erfindung ist es daher, eine Arretiervorrichtung beziehungsweise das die Arretiervorrichtung prägende Rastelement so auszugestalten, dass es für verschiedene Einsatzfälle, insbesondere in Verbindung mit Schalteinrichtungen in Kraftfahrzeugen, z.B. an Sperrbügeln eines Schaltsystems, geeignet ist. Die Arretiervorrichtung beziehungsweise das Rastelement soll mit einfachen Mitteln an entsprechenden Maschinenteilen angebaut werden können.

### Zusammenfassung der Erfindung

Die Aufgabe der Erfindung wird durch die Merkmale von Anspruch 1 gelöst.

In einer bevorzugten Ausgestaltung der Erfindung weist das Maschinenteil Öffnungen auf und die Führungslaschen sind mit Noppen oder Vorsprüngen versehen, die den Abmessungen der Öffnungen angepasst sind. Dadurch wird ein sicherer Halt des Rastelements an dem betreffenden Maschinenteil erreicht, ohne dass dies eines großen Aufwandes bedarf. Es reicht eine seitliche Fixierung aus, da der Rastkörper über die Rastfeder gegen die Rastausnehmung am anderen Maschinenteil verspannt ist und dabei auch auf die Führungslaschen eine Druckkraft ausgeübt wird, die sich auf das das Rastelement tragende Maschinenteil überträgt. Durch diese Ausgestaltung ist daher mit einfachen Mitteln eine gute Fixierung gewährleistet. Die Noppen bzw. die Vorsprünge werden z. B. mittels aus den Führungslaschen durchgestellten Materials erzeugt. Das Material kann dabei beispielsweise so durch gestellt und eventuell zeugt. Das Material kann dabei beispielsweise so durch gestellt und eventuell noch abgestreckt sein, dass die Durchstellung durch einen aus dem Material hervorstehenden und umlaufenden Kragen gebildet ist. Der Kragen geht dann von dem Rand eines durch die Durchstellung von Material aus der Führungslasche erzeugten Loches in der Führungslasche aus.

In vorteilhafter Weise werden die Noppen oder Vorsprünge durch Prägen der Führungslasche hergestellt. Dies kann sowohl in Werkzeugen als auch gegebenenfalls direkt im beziehungsweise am Maschinenteil erfolgen, wenn das Maschinenteil ausreichend abgestützt werden kann, so dass es sich nicht ungewollt verformt.

Gemäß einer anderen Ausgestaltung der Erfindung weisen die Führungslaschen Zentrierfinger auf, die in die Öffnungen eingepasst sind.

Die Zentrierfinger können dabei in vorteilhafter Weise an den Führungslaschen angeformt sein, wobei dies mittels Ausschneiden und Umbiegen erfolgen kann. Auch durch diese Ausgestaltung wird eine kostengünstige und sichere Fixierung erreicht.

Die Zentrierfinger können auch als Einzelteile hergestellt und an den Führungslaschen befestigt, z.B. verschweißt oder durchsetzgefügt sein.

Bei den zuvor geschilderten erfindungsgemäßen Ausgestaltungen kann das Rastelement leicht in das Maschinenteil eingesetzt oder an dem Maschinenteil fixiert werden und genauso leicht wieder entnommen werden.

Es ist natürlich auch möglich, das Rastelement mittels der Führungslaschen an dem entsprechenden Maschinenteil intensiver zu befestigen, z.B. durch Verschweißen, durch Verschrauben oder durch Nieten.

### Kurze Beschreibung der Zeichnungen

Zur weiteren Erläuterung der Erfindung wird auf die Zeichnungen verwiesen, in denen Ausführungsbeispiele der Erfindung vereinfacht dargestellt sind. Es zeigen:
- Figur 1: eine Ansicht einer Arretiervorrichtung mit Schnitt durch ein Rastelement und ein das Rastelement tragendes Maschinenteil,
- Figur 2: eine Seitenansicht eines Rastelements gemäß Figur 1,
- Figur 3: einen Schnitt durch ein Rastelement entsprechend der Linie III - III in Figur 2, wobei der Schnitt nach Figur 3 dem Schnitt durch das Rastelement gemäß Figur 1 in verändertem Maßstab entspricht,
- Figur 4: eine Draufsicht auf das Rastelement gemäß den Figuren 2 und 3,
- Figur 5: eine Seitenansicht eines modifizierten Rastelements,
- Figur 6: ein Schnitt durch das Rastelement entsprechend der Linie VI - VI in Figur 5,
- Figur 7: eine Draufsicht auf das Rastelement gemäß den Figuren 5 und 6,
- Fig. 8 u. 9: Längsschnitte durch ein weiter modifiziertes Rastelement und
- Figur 10: eine Draufsicht auf das Rastelement gemäß den Figuren 8 und 9.

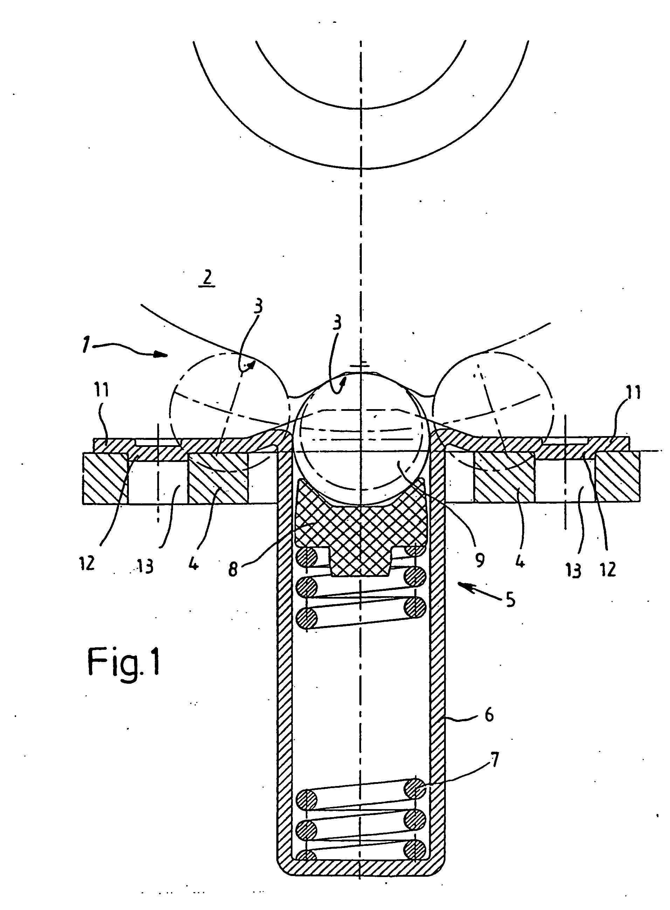

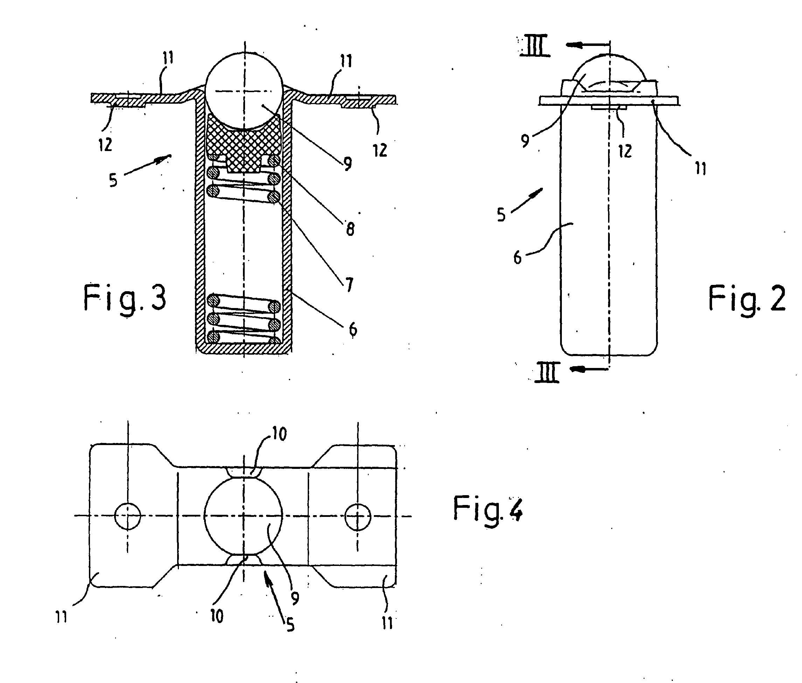

In den Figuren 1 bis 10 ist, soweit im einzelnen dargestellt, mit 1 allgemein eine Arretiervorrichtung bezeichnet, die ein Maschinenelement 2 mit Rastausnehmungen 3 aufweist und ein Maschinenteil 4, an dem ein Rastelement 5 fixiert ist. Das Rastelement 5 weist ein Tragelement 6 auf, in dem eine Rastfeder 7, ein Gleitstück 8 und einen als Kugel ausgebildeten Rastkörper 9 beinhaltet. Der Rastkörper 9 ist mittels Haltelaschen 10 (siehe insbesondere Figuren 4, 7 und 10) gegen die Kraft der Rastfeder 7 abgestützt.

Weiterhin weist das Tragelement 6 Führungslaschen 11 auf, die gemäß dem Ausführungsbeispiel nach den Figuren 1 bis 4 Vorsprünge 12 aufweisen, die in Öffnungen 13 im Maschinenteil 4 (Figur 1) eingepasst sind. Die Vorsprünge sind - dies ist wiederum den Figuren 1 bis 4 zu entnehmen - durch Prägen hergestellt worden.

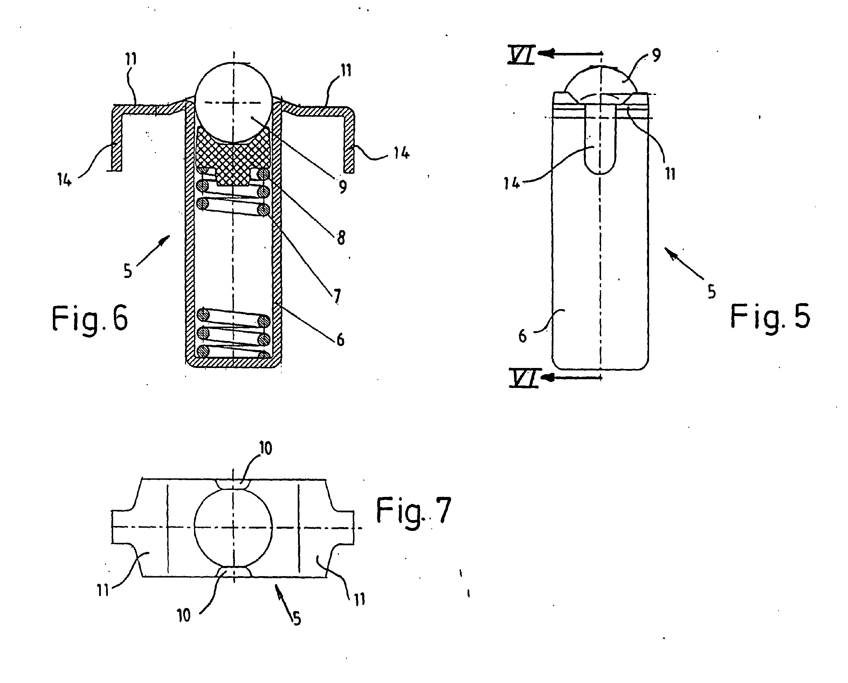

Alternativ zu den Vorsprüngen 12 können an den Führungslaschen 11 auch Zentrierfinger 14 angeformt sein, wie dies in den Figuren 5 bis 10 dargestellt ist. Die Zentrierfinger 14 sind durch Umbiegen von Verlängerungen an den Führungslaschen hergestellt und so in die Öffnungen 13 eingepasst, dass auch dadurch eine gute Fixierung des Rastelements 5 an dem Maschinenteil 4 gewährleistet ist.

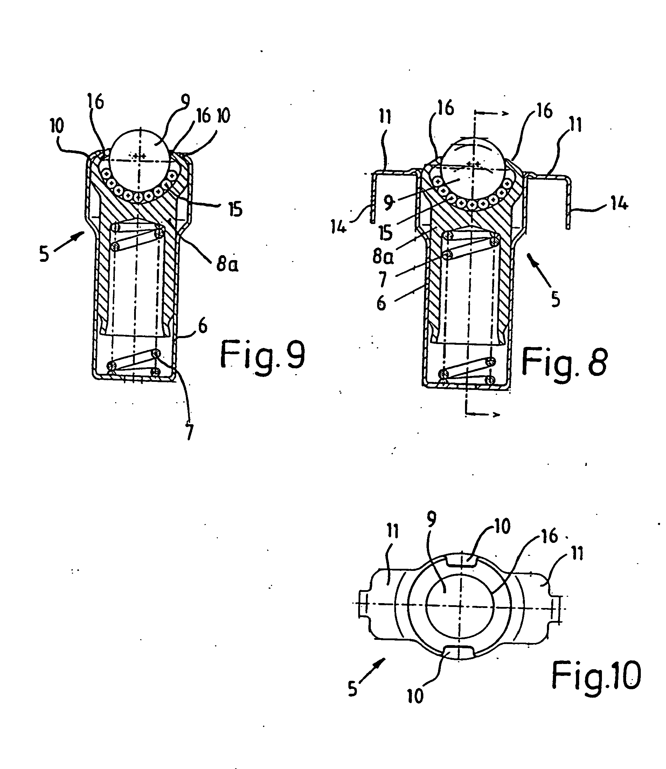

In dem Ausführungsbeispiel gemäß den Figuren 8 bis 10 ist das Gleitstück modifiziert und mit 8a bezeichnet. Der Rastkörper, der ebenfalls als Kugel ausgebildet ist, rollt mittels Zwischenkugeln 15 auf dem Gleitstück 8a ab und ist seinerseits mit an dem Gleitstück 8a angebrachter Bördelung 16 gegen Herausfallen gesichert.

In dem Ausführungsbeispiel gemäß den Figuren 8 bis 10 wird das Gleitstück 8a durch die Haltelaschen 10 gegen die Kraft der Rastfeder 7 abgestützt.
- 1: Arretiervorrichtung
- 2: Maschinenelement
- 3: Rastausnehmung
- 4: Maschinenteil
- 5: Rastelement
- 6: Tragelement
- 7: Rastfeder
- 8: Gleitstück
- 8a: Gleitstück
- 9: Rastkörper
- 10: Haltelaschen
- 11: Führungslaschen
- 12: Vorsprünge
- 13: Öffnungen
- 14: Zentrierfinger
- 15: Zwischenkugeln
- 16: Bördelung

## Patentansprüche

1. Arretiervorrichtung (1) bestehend aus
- zwei zueinander beweglichen Maschinenteilen (2, 4) mit zumindest einer Rastausnehmung (3) am ersten Maschinenteil (2)
- und mit einem Rastelement (5) am zweiten Maschinenteil (4),
wobei das Rastelement (5) ein Tragelement (6), eine darin angeordnete Rastfeder (7), gegebenenfalls ein Gleitstück (8, 8a) und einen Rastkörper (9) aufweist, wobei die Bewegung des Rastkörpers (9) oder des Gleitstückes (8a) mittels Haltelaschen (10) gegen die Kraft der Rastfeder (7) begrenzt ist, die sich ihrerseits am Fuß des Tragelements (6) abstützt und wobei an dem Tragelement (6), vorzugsweise an dem dem Rastkörper (9) zugewandten Ende, Führungslaschen (11) vorgesehen sind, **dadurch gekennzeichnet, dass** die Führungslaschen (11) des Rastelementes (5) am zweiten Maschinenteil (4) fixiert sind.

2. Arretiervorrichtung nach Anspruch 1, **dadurch gekennzeichnet, dass** die Führungslaschen (11) Noppen oder Vorsprünge (12) aufweisen, welche an Öffnungen (13) des zweiten Maschinenteils (4) fixierbar sind, wobei die Noppen oder Vorsprünge (12) den Abmessungen der Öffnungen (13) angepasst sind.

3. Arretiervorrichtung nach Anspruch 2, **dadurch gekennzeichnet, dass** die Noppen oder Vorsprünge (12) durch Prägen hergestellt sind.

4. Arretiervorrichtung nach Anspruch 1, **dadurch gekennzeichnet, dass** die Mittel als Zentrierfinger (14) ausgebildet sind, die in Öffnungen (13) am zweiten Maschinenteil (4) einpassbar sind.

5. Arretiervorrichtung nach Anspruch 4, **dadurch gekennzeichnet, dass** die Zentrierfinger (14) als Einzelteile hergestellt und an den Führungslaschen (11) befestigt sind.

6. Arretiervorrichtung nach einem der vorhergehenden Ansprüche, **dadurch gekennzeichnet, dass** die Führungslaschen (11) mit dem zweiten Maschinenteil (4) verschweißt sind.

## Claims

1. Locking device (1) comprising
- two machine parts (2, 4) movable relative to each other, with least one locking recess (3) on the first machine part (2)
- and with one locking element (5) on the second machine part (4),
said locking element (5) comprising a carrier element (6), a locking spring (7) arranged therein, if need be a sliding block (8, 8a), and a detent body (9), the movement of the detent body (9) or of the sliding block (8a) being limited, against the force of the locking spring (7), by means of retaining tabs (10), said locking spring (7) being supported on the base of the carrier element (6), and guide tabs (11) being provided on the carrier element (6), preferably on the end turned towards detent body (9), **characterised in that** the guide tabs (11) of the locking element (5) are fixed on the second machine part (4).

2. Locking device according to claim 1, **characterised in that** the guide tabs (11) comprise knobs or projections (12) that can be fixed on openings (13) of the second machine part (4), said knobs or projections (12) being matched to the dimensions of the openings (13).

3. Locking device according to claim 2, **characterised in that** the knobs or projections (12) are made by stamping.

4. Locking device according to claim 1, **characterised in that** the means are configured as centring fingers (14) that can be fitted into openings (13) on the second machine part (4).

5. Locking device according to claim 4, **characterised in that** the centring fingers (14) are made as separate parts and fixed on the guide tabs (11).

6. Locking device according to one of the preceding claims, **characterised in that** the guide tabs (11) are welded to the second machine part (4).

## Revendications

1. Dispositif (1) d'arrêt comprenant
- deux pièces (2, 4) de machine qui sont mobiles, l'une par rapport à l'autre, et qui comprennent, au moins, un évidemment (3) d'arrêt disposé sur la première pièce (2) de machine,
- et un élément (5) d'arrêt disposé sur la seconde pièce (4) de machine, cet élément (5) d'arrêt comprenant un élément (6) de support avec un ressort (7) d'arrêt agencé dans élément (6) de support, au besoin un plot de glissement (8, 8a), et une détente (9), le mouvement de la détente (9) ou du plot de glissement (8a) étant limité, à l'encontre de la force du ressort (7) d'arrêt, au moyen de talons (10) de retenue, ledit ressort (7) d'arrêt étant supporté sur la base de l'élément (6) de support, et des talons (11) de guidage étant prévus sur l'élément (6) de support, de préférence, à l'extrémité faisant face à la détente (9), **caractérisé en ce que** les talons (11) de guidage de l'élément (5) d'arrêt sont fixés sur la seconde pièce (4) de machine.

2. Dispositif d'arrêt selon la revendication 1, **caractérisé en ce que** les talons (11) de guidage comprennent des empreintes ou des saillies (12) qui peuvent être fixées à des ouvertures (13) de la seconde pièce (4) de machine, et les dimensions de ces empreintes ou saillies (12) sont adaptées aux celles des ouvertures (13).

3. Dispositif d'arrêt selon la revendication 2, **caractérisé en ce que** les empreintes ou saillies (12) sont réalisées par estampage.

4. Dispositif d'arrêt selon la revendication 1, **caractérisé en ce que** les moyens sont configurés sous la forme de doigts (14) de centrage qui peuvent être emboîtés dans des ouvertures (13) prévues sur la seconde pièce (4) de machine.

5. Dispositif d'arrêt selon la revendication 4, **caractérisé en ce que** les doigts (14) de centrage sont fabriqués sous la forme de pièces séparées qui sont fixés par la suite aux talons (11) de guidage.

6. Dispositif d'arrêt selon l'une des revendications précédentes, **caractérisé en ce que** les talons (11) de guidage sont soudés à la seconde pièce (4) de machine.
